Europäisches Patentamt

European Patent Office

Office européen des brevets

(11) Publication number: **0 585 861 A2**

# EUROPEAN PATENT APPLICATION

(21) Application number: **93113849.9**

(22) Date of filing: **30.08.93**

(51) Int. Cl.5: **G06K 9/64**

(30) Priority: **31.08.92 JP 255572/92**

(43) Date of publication of application:
**09.03.94 Bulletin 94/10**

(84) Designated Contracting States:
**DE FR GB**

(71) Applicant: **YOZAN INC.**
**3-5-18, Kitazawa,**
**Setagaya-ku**
**Tokyo 155(JP)**

(72) Inventor: **Shou, Guoliang, c/o Yozan Inc.**
**3-5-18, Kitazawa**
**Setagaya-ku**
**Tokyo 155(JP)**
Inventor: **Takatori,Sunao, c/o Yozan Inc.**
**3-5-18, Kitazawa**
**Setagaya-ku**
**Tokyo 155(JP)**
Inventor: **Yamamoto, Makoto c/o Yozan Inc.**
**3-5-18, Kitazawa**
**Setagaya-ku**
**Tokyo 155(JP)**

(74) Representative: **Patentanwälte Grünecker,**
**Kinkeldey, Stockmair & Partner**
**Maximilianstrasse 58**
**D-80538 München (DE)**

(54) **Image verification method.**

(57) A plurality of successive pixels of a template and corresponding pixels of an input image inputted into a hardware with a function of multiplication, addition and subtraction. A summation of differences is calculated by the hardware between the corresponding pixels of template and input image, and written into a work memory. An image verification is performed by integrating successive results of the summation for the total area to be verified in high speed with utilizing a general purpose image processing hardware, without using a special purpose image processing hardware.

FIG. 1

## FIELD OF THE INVENTION

This invention relates to an image verification method performing a verification of characters etc., for example, by using an image processing system.

## BACKGROUND OF THE INVENTION

Conventionally, it is necessary to design a special hardware to perform an image verification by differentiation in high speed and there is a problem that the production cost is very high as long as an amount of sales is not expected. An image verification by a software is unavailable for practical inspection because it takes a lot of processing time.

## SUMMARY OF THE INVENTION

An image verification method according to the present invention is invented so as to solve the conventional problems and it has an object to provide a method for performing an image verification method in high speed without using a special hardware.

According to the image verification method of the present invention, a summation of density difference is calculated between pixels of input image and template image, by means of a general purpose hardware. The calculation result for a small area processable by the hardware is stored in a work memory. The total input image is verified by repeating the calculation and storing.

## BRIEF DESCRIPTION OF THE DRAWINGS

Figure 1 is a conceptual diagram of an input image and a template.

Figure 2 is an enlarged diagram of an image and a template.

Figure 3 is an embodiment of a convolution of a template, an input image and a work memory.

Figure 4 is another embodiment of a convolution of a template, an input image and a work memory.

Figure 5 is other embodiment of a convolution of a template, an input image and a work memory.

Figure 6 shows of a template and a convolution.

Figure 7 is an embodiment of a template and a verification area and a work memory in an input image.

Figure 8 is another embodiment showing a template and a verification area and a work memory in an input image.

Figure 9 is other embodiment showing a template, and a verification area and a work memory in an input image.

Figure 10 is a conceptual diagram of a histogram.

Figure 11 is a conceptual diagram of a template and an input image.

Figure 12 is a diagram explaining a division of a template.

## PREFERRED EMBODIMENT OF THE PRESENT INVENTION

Hereinafter an embodiment of the present invention is described with referring to the attached drawings.

In Figure 11, P is an input image (M x N), t is a template image (m x n), P(i, j) is a density value ($0{\leq}i{<}M$, $0{\leq}j{<}N$) of a pixel at the coordinates (i, j) and t(i, j) is a density value ($0{\leq}i{<}m$, $0{\leq}j{<}n$) of a pixel at the coordinates (i, j). A difference is calculated as the following Formula 1,

$$d(i, j|x, y) = |P(x+i, y+j) - t(i, j)| \qquad (1)$$

then summation of difference is calculated as the Formula 2,

$$D(x, y) = \sum_{i=0}^{m-1} \sum_{j=0}^{n-1} |P(x+i, y+j) - t(i, j)| \qquad (2)$$

$(0{\leq}X{\leq}M\text{-}m, o{\leq}y{\leq}N\text{-}n)$

$$= \sum_{i=0}^{m-1} \sum_{j=0}^{n-1} d(i, j \mid x, y) \qquad (3)$$

Dividing the template of m x n pixels into K x L areas as shown in Figure 13, the difference is written as the Formula 4.

$$D(x, y) = \sum_{k=0}^{K-1} \sum_{l=0}^{L-1} \sum_{i=k \cdot K}^{(k+1)K-1} \sum_{j=l \cdot L}^{(l+1)L-1} d(i, j \mid x, y) \qquad (4)$$

A sympototic formula for successively calculating D(x, y) above is shown in Formula 5.

$$
\left.
\begin{aligned}
C(0) &= 0 + \delta(0, 0) \\
C(1) &= C(0) + \delta(0, 1) \\
C(L-1) &= C(L-2) + \delta(0, L-1) \\
&\quad \vdots \\
C(k+1) &= C(k+1-1) + \delta(k, 1) \\
&\quad \vdots \\
C(K-1+L-1) &= C(K-1+L-2) + \delta(K-1, L-1)
\end{aligned}
\right\} (5)
$$

Here, C(K+1) is a constant (summation of products), and $\delta$ (k, 1) is a difference between a convolution K x L of a template and an input image P, and the final C(K-1+L-1) becomes D(X, Y).

The calculation of Formula 5 is executed by a hardware as mentioned below.

General image processing hardware, (for example, Image Processing Board TAICHI-CORE by EZEL Inc.) usually has a function of multiplication, addition and subtraction of 3 x 3 convolution in high speed. The density value of a pixel of a convolution in the template is used as a parameter of the calculation of the hardware. The difference $\delta$ (K+1) of Formula 5, that is, a difference of a density value of a pixel of a convolution of a template and an input image, can be calculated at one time processing. The high speed processings can be realized.

A method for finally calculating D(x, y) with hardware after successively calculating a difference $\delta(k+1)$ is explained below.

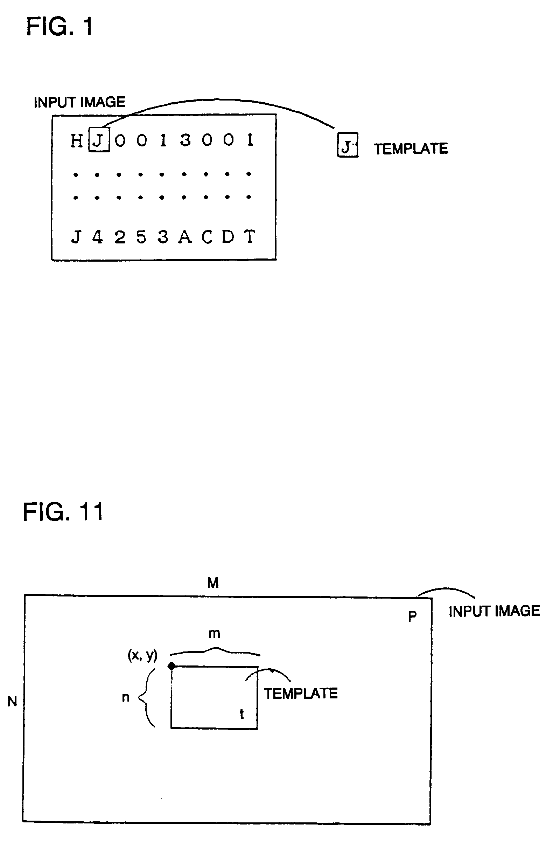

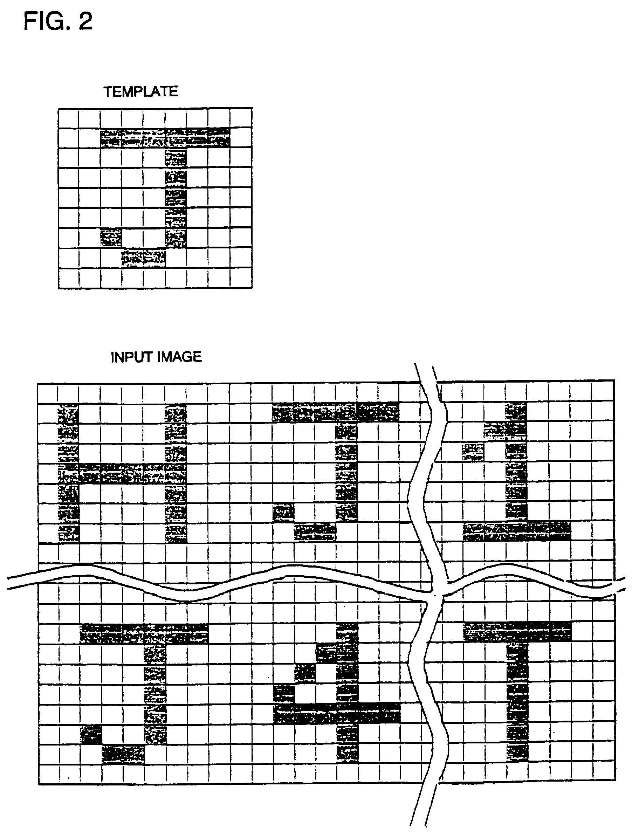

A template and an image with characters to be verified are shown in Figure 1, and enlarged images thereof is shown in Figure 2. In the present embodiment, the character of a template is J, a size of the template is 9 pixels x 9 pixels. The input image is verified by the template.

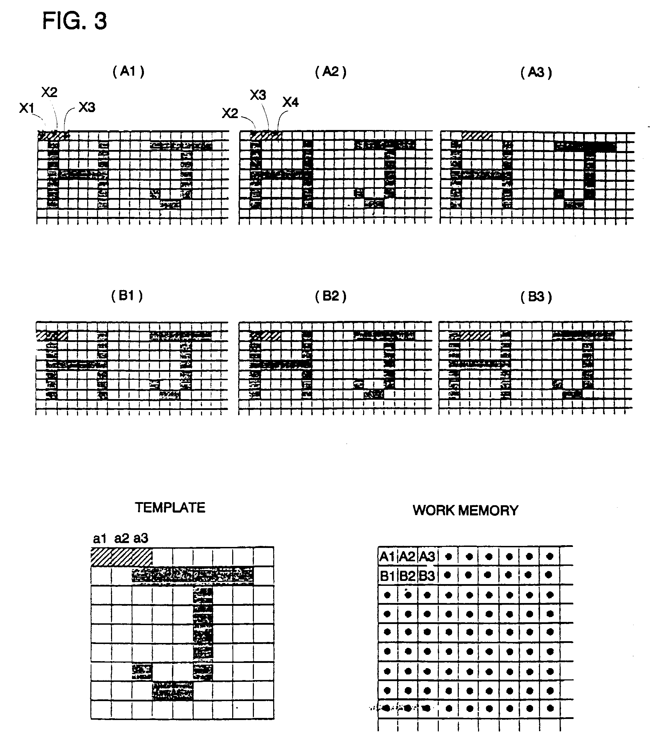

In Figure 3, a summation of $D_1$ ($\alpha_1$) differences is calculated between pixels at the corresponding positions in a convolution of a template. 3 pixels with oblique lines, and their density values are defined as a1, a2 and a3, and 3 pixels with oblique lines shown in an input image T1, (density values thereof are defined as x1, x2 and x3. The difference is stored in a address of $A_1$ of work memory.

The difference $D_1$ ($\alpha_1$) is calculated as below.

$$z + |x1-a1| + |x2-a2| + |x3-a3| = D_1(\alpha_1) \qquad (6)$$

In the Formula 6, Z is a constant. a1, a2 and a3 are the density values of each pixel in the convolution of the template. x1, x2 and x3 are density values of each pixel of an input image.

On calculating a difference between the first convolution in the template and an input image, the constant z is o.

On comparing parameters of Formula 5 with the Formula 6, Z is 0 in Formula 5, $|x1-a1| + |x2-a2| + |x3-a3|$ is $\delta$ (0,0) and $D_1(\alpha_1)$ is C(O).

3

The difference $D_1(\alpha_2)$ is calculated between 3 pixels with oblique lines of the same template and 3 pixels with oblique lines shown in an input image $A_2$ (it is dislocated by 1 pixel rightwardly from $A_1$) and it is stored in $A_2$ next to $A_1$ of a work memory. In the same way, differences $D_1(\beta_1)$, $D_1(\beta_2)$ and $D_1(\beta_3)$ between 3 pixels with oblique lines shown in input images $B_1$, $B_2$ and $B_3$ and 3 pixels with oblique lines of a template are stored in the addresses $B_1$, $B_2$ and $B_3$ of work memories $B_1$, $B_2$ and $B_3$.

The differences are successively calculated between a pixel of a convolution on a predetermined position of a template and a pixel of the convolution with the same size and with an offset by one pixel in the whole input image, and they are stored in a work memory . An image generated on the work memory is defined as IMD1.

The differences are successively calculated between a pixels of a convolution on another predetermined position of a template ( it does not overlap 3 pixels above of the convolution in the predetermined position) and the convolution with the same size and with an offset by one pixel in the whole input image, the calculated difference is added to the data in the work memory. Then, is the image $IMD_1$ and image $IMD_2$ are generated.

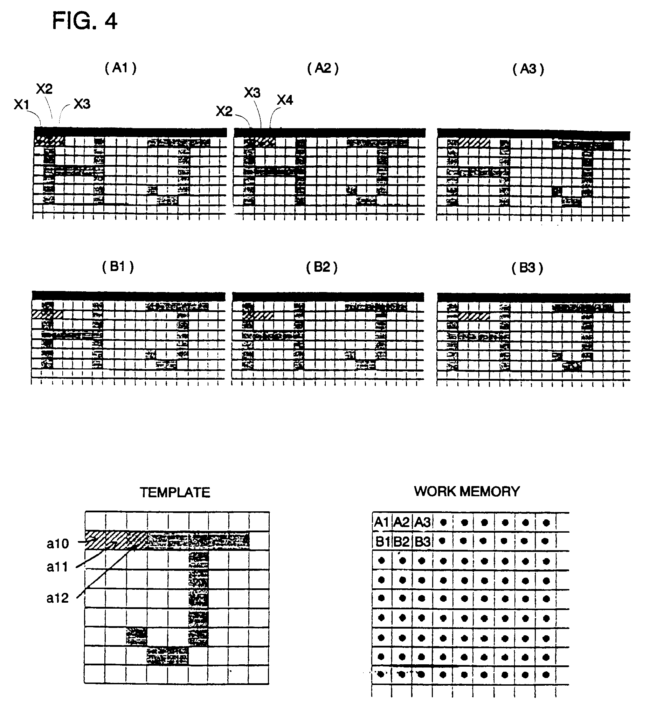

In Figure 4, for example, 3 pixels with oblique lines of the template and a difference of a density value among 3 pixels with oblique lines shown in the input image $A_1$, $A_2$, $A_3$, $B_1$, $B_2$ and $B_3$ are added to the data in work memory. The differences are added to $A_1$, $A_2$, $A_3$, $B_1$, $B_2$ and $B_3$ in the work memory and registered in the memory again. $A_1$ work memory is shown by Formula 7.

$$D_1(\alpha_1) + |xn\text{-}a10| + |xn+1\text{-}a11| + |xn+2\text{-}a12| = D_2(\alpha_2) \qquad (7)$$

In Formula 7, a10, a11 and a12 are density values of each pixel of a convolution of a template, xn, xn + 1 and xn + 2 are density values of each pixel of an input image. When these values are compared with the parameters in the Formula 5, $D_1(\alpha_2)$ is C(0) in Formula 5.

$|xn\text{-}a10| + |xn+1\text{-}a11| + |xn+2\text{-}a12|$ is $\delta(0,1)$ and $D_2(\alpha_2)$ is C(1).

An image area for which the difference is calculated of an input image changes in response to the change of a position of a convolution of a template. That is, shown in Figure 4, when a convolution of a template is positioned on the 2nd line from the top, an image area for calculating a difference of an input image should be 2nd from the top That is, a pixel on the top ( it is drawn by dark on Figure 4) is excepted.

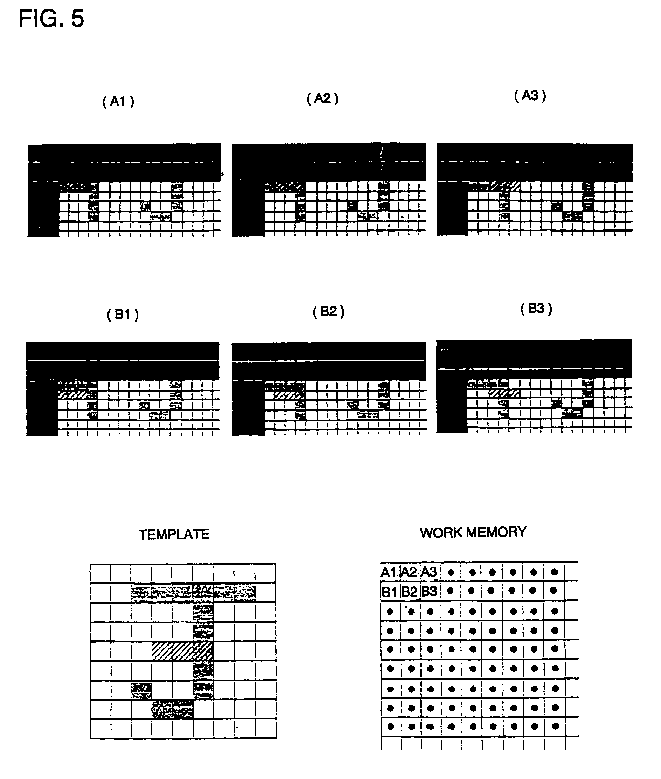

When a position of a convolution of a template has 3 pixels with oblique lines shown by Figure 5, the image area for calculating differences between 3 pixels with oblique lines in $A_1$, $A_2$, $A_3$, $B_1$, $B_2$ and $B_3$ does not include 4 pixels from the top and 3 pixels from the right, for example, which are drawn dark.

An embodiment of the present invention, a convolution (oblique lines) of a template has 3 pixels, so there are 27 groups (9 pixels x 9 pixels / 3 pixels = 27 groups). Difference calculation between each convolution and input images are performed 27 times and 27 differences are added to $A_1$, $A_2$ and $A_3$ of a work memory.

A difference calculation for $A_1$ between a pixel of convolutions of 27th template and a pixel of an input image is shown in Formula 8.

$$D_{26}(\alpha_{26}) + |xq\text{-}a79| + |xq+1\text{-}a80| + |xq+2\text{-}a81| = D_{27}(\alpha_{27}) \qquad (8)$$

a79, a80 and a81 are pixel values of each pixel of a convolution of a template, and xq, xq + 1 and xq + 2 are density values of each pixel of an input image.

When these values are compared with parameters in Formula (5), $D_{26}(\alpha_{26})$ is C(K-1 + L-2) in Formula 5.

$|xq - a79| + |xq+1 - a80| + |xq+2 - a81|$ is $\delta(K\text{-}1, L\text{-}1)$, and $D_{27}(\alpha_{27})$ is C(K-1 + L + 1), that is D(x, y).

27 pairs of convolutions of a template are surrounded by a thick line, and the difference calculations with an input image are performed from 1st pair to the 27th pair in this embodiment.

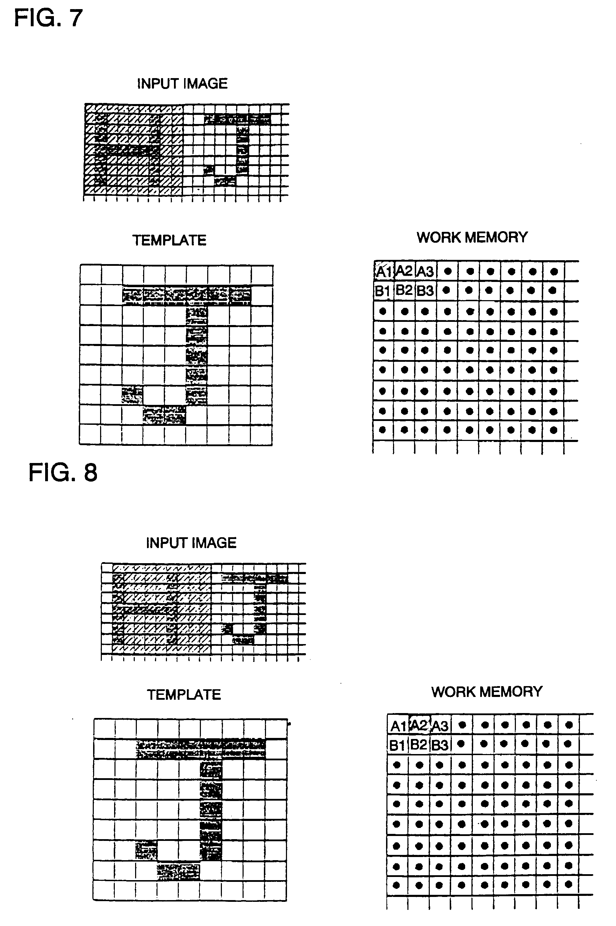

As shown in Figures 7, 8 and 9, a difference between a template and each image verification area with the same size as the template in an input image is written in a work memory as a density value.

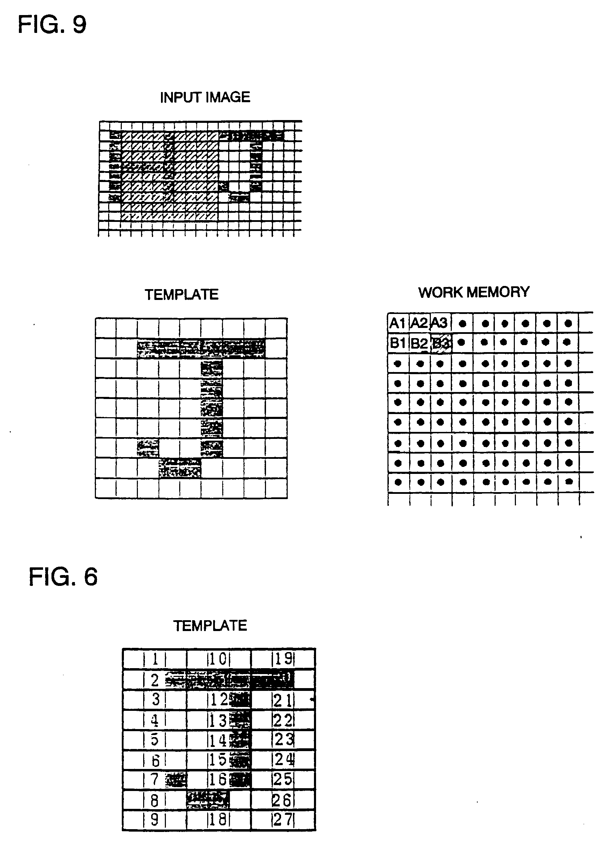

The differences of a verification area surrounded by thick oblique lines in a template and an input image shown as Figure 7 are integrated in $A_1$ of a work memory. In the same way, the differences of a verification area surrounded by thick oblique lines in a template and an input image are integrated in $A_2$ as shown by Figure 8. The differences of a verification area surrounded by thick oblique lines in a template and input image are integrated in $A_3$ of a work memory 3, as shown in Figure 9.

Formulas 3 and 4 are explained, concerning the number of times of operation on a hardware. In Formula 3, the number of times of subtraction and summation for calculating the difference summation D(x, y) is as follows.

4

$$n \times m \times 2 - 1 \qquad (9)$$

On the other hand, the number of times of calculation for calculating a difference summation D(x, y) by Formula 4 shown in the embodiment, Formula 5 can calculate $\delta$(k, 1) once. So, the calculation times is as follows.

$$\frac{m}{K} \times \frac{n}{L} \qquad (10)$$

The ratio of processing time of Formula 3 comparing to Formula 4 is calculated as an Formula 11.

$$\frac{n \ \times \ m \ \times \ 2 \ - \ 1}{m \ \times \ n} \ * \ K \ * \ L \ \fallingdotseq \ 2KL \qquad (1 1)$$

In the above embodiment, k = 3 and L = 1, it is possible to operate in about 6 times faster by using Formula 11 for templates of n = 9 and m = 9.

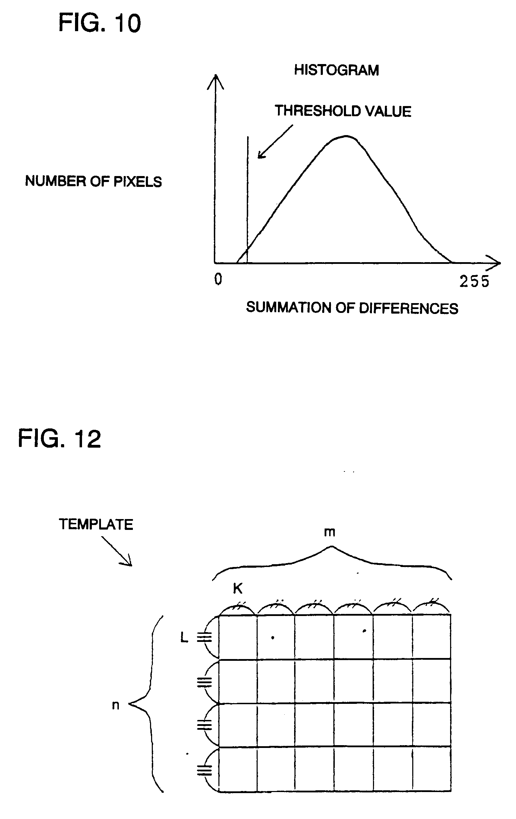

Next, a histogram is calculated of the summation of differences in Figure 10. Obviously, a difference, that is the minimum verification area of a difference of a density value is thought to have the same character as a template has. If 5 characters 'J', then selecting 7 pixels with considering an error from the minimal summation value in the histogram, for example. Verification area corresponds to these pixels, it is extracted and verified.

To extract an verification area, a pixel value where 7th pixel takes a position from the minimal density value, and it is possible to process in high speed by extracting a coordinates of a verification area corresponding to the 7th pixel after binarization.

As mentioned above, an image verification method according to the present invention can express a difference of a verification area with a template by a density value of a pixel, and it can realize an image verification in high speed without using a special hardware.

## Claims

1. An image verification method for extracting an area of similarity more than a predetermined level in an input image by calculating summation of density difference between corresponding pixels of said image and a template image with a size equal to said area comprising steps of:
   registering densities of successive pixels of said template image in an image processing hardware for calculating, addition and subtraction of a predetermined convolution;
   inputting densities of pixels in said input image corresponding to said pixels registered;
   calculating summation of density difference between said corresponding pixels by means of said hardware;
   storing said summation in a work memory; and
   repeating said steps above until total pixels of said area are processed.

2. An image verification method as claimed in Claim 1, further comprising steps of:
   calculating a histogram of said summation in said work memory;
   counting number of pixels from the minimal summation up to a predetermined number of pixel so as to define the density of the last pixel counted as a threshold density;
   binarizing said summation data by said threshold density; and
   calculating coordinate of pixels with significant summation after said binarizing.

# FIG. 1

INPUT IMAGE

H J 0 0 1 3 0 0 1

. . . . . . . . .

. . . . . . . . .

J 4 2 5 3 A C D T

J· TEMPLATE

# FIG. 11

M

P INPUT IMAGE

m

(x, y)

N

n

t

TEMPLATE

# FIG. 2

TEMPLATE

INPUT IMAGE

# FIG. 3

( A1 )  ( A2 )  ( A3 )

( B1 )  ( B2 )  ( B3 )

TEMPLATE

a1 a2 a3

WORK MEMORY

# FIG. 4

(A1)

(A2)

(A3)

(B1)

(B2)

(B3)

TEMPLATE

WORK MEMORY

# FIG. 5

(A1)

(A2)

(A3)

(B1)

(B2)

(B3)

TEMPLATE

WORK MEMORY

## FIG. 7

INPUT IMAGE

TEMPLATE

WORK MEMORY

## FIG. 8

INPUT IMAGE

TEMPLATE

WORK MEMORY

# FIG. 9

INPUT IMAGE

TEMPLATE

WORK MEMORY

# FIG. 6

TEMPLATE

# FIG. 10

HISTOGRAM

THRESHOLD VALUE

NUMBER OF PIXELS

0                              255

SUMMATION OF DIFFERENCES

# FIG. 12

TEMPLATE

m

K

L

n